# EUROPÄISCHE PATENTSCHRIFT

(11) **EP 2 033 842 B1**
(45) Veröffentlichungstag und Bekanntmachung des Hinweises auf die Patenterteilung: **13.03.2013**
(21) Anmeldenummer: 08012914.1
(22) Anmeldetag: 17.07.2008
(51) Int. Cl.: B60R 5/04

(54) **Kraftfahrzeuginneneinrichtung mit einem verschwenkbaren Ladeboden zur Laderaumunterteilung**
Motor vehicle interior fittings with a pivotable loading floor for partitioning the loading space
Aménagement intérieur de véhicule automobile doté d'un plancher de chargement basculant pour la division de l'espace de chargement

(30) Priorität: 06.09.2007 DE 102007042366
(43) Veröffentlichungstag der Anmeldung: 11.03.2009
(73) Patentinhaber: GM Global Technology Operations LLC, Detroit, MI 48265-3000 (US)
(72) Erfinder: Fischer, Wolfgang, 65462 Ginsheim-Gustavsburg (DE); Mau, Karsten, 64521 Gross-Gerau (DE)
(74) Vertreter: Strauss, Peter

(56) Entgegenhaltungen:
- GB-A- 2 440 641
- JP-A- 2003 002 122
- JP-A- 2003 341 432

## Beschreibung

Die vorliegende Erfindung betrifft eine Kraftfahrzeuginneneinrichtung mit einem über einem Laderaumboden angeordneten Ladeboden, der um eine erste Schwenkachse verschwenkbar an dem Kraftfahrzeug angeordnet ist.

Aus dem Stand der Technik sind verschiedene Kraftfahrzeuginneneinrichtungen bekannt, die einen über dem feststehenden Laderaumboden angeordneten Ladeboden aufweisen. Zur Veränderung des Volumens des Laderaums können die Ladeböden der bekannten Kraftfahrzeuginneneinrichtungen verschwenkt und/oder höhenverstellt werden.

So beschreibt die WO 03/104035 A1 eine Kraftfahrzeuginneneinrichtung mit einem manuell höhenverstellbaren Ladeboden oberhalb des Laderaumbodens. Die bekannte Kraftfahrzeuginneneinrichtung umfasst einen einstückigen, plattenförmigen Ladeboden, der über eine erste Schwenkachse verschwenkbar mit einem Hebelteil verbunden ist. Das Hebelteil ist wiederum um eine zweite Schwenkachse verschwenkbar an dem Kraftfahrzeug angeordnet, wobei sich die zweite Schwenkachse parallel zu der ersten Schwenkachse erstreckt. Um den Ladeboden von der oberen Ladebodenposition in die untere Ladebodenposition zu verschwenken, wird der Ladeboden zunächst um die erste Schwenkachse verschwenkt, so dass dieser schräg gestellt ist. Anschließend wird das Hebelteil zusammen mit dem Ladeboden um die zweite Schwenkachse nach unten verschwenkt, so dass der Ladeboden in die untere Ladebodenposition verschwenkt ist. Sowohl in der oberen Ladebodenposition als auch in der unteren Ladebodenposition ist der Ladeboden in einer horizontalen Ebene angeordnet und auf entsprechenden Auflageflächen nach unten abgestützt.

Die bekannte Kraftfahrzeuginneneinrichtung mit Ladeboden hat den Nachteil, dass einerseits die Handhabung des Ladebodens beim Verstellen zwischen der oberen und der unteren Ladebodenposition erschwert ist und andererseits die Verwendbarkeit des Ladebodens für weitere Zwecke, wie beispielsweise eine weitere Laderaumunterteilung, eingeschränkt ist. Darüber hinaus bietet die bekannte Kraftfahrzeuginneneinrichtung keine Möglichkeit, den Ladeboden Platz sparend in eine Stauposition zu bewegen, in der der Ladeboden nicht benötigt wird.

Die JP 2003 341432 A beschreibt eine Kraftfahrzeuginneneinrichtung mit einem auf einem Laderaumboden angeordneten Ladeboden, der einen vorderen und einen hinteren Ladebodenabschnitt aufweist, die um eine Schwenkachse verschwenkbar miteinander verbunden sind. In einer Gebrauchsposition ist der hintere Ladebodenabschnitt in einer horizontalen Ebene angeordnet. Der hintere Ladebodenabschnitt kann in eine Nichtgebrauchsposition überführt werden, indem die beiden Ladebodenabschnitte relativ zueinander um die Schwenkachse verschwenkt werden, wodurch sowohl der vordere als auch der hintere Ladebodenabschnitt aus der horizontalen Ebene nach oben verschwenkt werden. Auf diese Weise wird ein Aufnahmefach innerhalb des Ladebodens freigegeben, das nunmehr zugänglich ist.

Bei der bekannten Kraftfahrzeuginneneinrichtung besteht der Nachteil, dass die Nutzbarkeit des Laderaums durch den hinteren Ladebodenabschnitt eingeschränkt und der Ladeboden nur bedingt zur Laderaumunterteilung geeignet ist, wenn sich der hintere Ladebodenabschnitt in der Nichtgebrauchsposition befindet.

Es ist daher eine Aufgabe der vorliegenden Erfindung, eine Kraftfahrzeuginneneinrichtung mit einem Ladeboden zu schaffen, die eine einfache Handhabung des Ladebodens beim Verstellen in unterschiedliche Positionen, eine vielseitige Verwendbarkeit des Ladebodens , wie beispielsweise zu einer weiteren Laderaumunterteilung, und ein Platz sparendes Verstauen des Ladebodens bei Nichtgebrauch ermöglicht.

Diese Aufgabe wird durch die in Patentanspruch 1 angegebenen Merkmale gelöst. Vorteilhafte Ausführungsformen der Erfindung sind Gegenstand der Unteransprüche.

Die erfindungsgemäße Kraftfahrzeuginneneinrichtung weist einen Laderaumboden auf, über dem ein Ladeboden angeordnet ist, der um eine erste Schwenkachse verschwenkbar an dem Kraftfahrzeug angeordnet ist. Erfindungsgemäß weist der Ladeboden zwei Abschnitte auf, nämlich einen hinteren Ladebodenabschnitt und einen vorderen Ladebodenabschnitt. Die beiden Ladebodenabschnitte sind um eine zweite Schwenkachse verschwenkbar miteinander verbunden, was beispielsweise mit Hilfe eines Scharniers bewirkt werden kann. Der hintere Ladebodenabschnitt kann von einer Gebrauchsposition, in der der hintere Ladebodenabschnitt in einer horizontalen Ebene angeordnet ist, um die zweite Schwenkachse in eine Nichtgebrauchsposition verschwenkt werden, in der der hintere Ladebodenabschnitt in einer schräg gestellten oder vertikalen Ebene angeordnet ist. Es sind ferner fahrzeugseitige Arretierungsmittel zum Arretieren des hinteren Ladebodenabschnitts in der Nichtgebrauchsposition vorgesehen.

Der hintere Ladebodenabschnitt kann nach unten unter die horizontale Ebene in die Nichtgebrauchsposition verschwenkt werden. Dies ist insofern von Vorteil, als dass der nach unten verschwenkte hintere Ladebodenabschnitt besonders einfach arretiert oder an dem Kraftfahrzeug abgestützt werden kann. Ferner entspricht die nach unten gerichtete Schwenkbewegung im Wesentlichen auch der Eingriffsrichtung, in die eine Bedienungsperson greift, um an einen Gegenstand an dem Laderaumboden zu gelangen, wodurch die Handhabung nachhaltig vereinfacht ist.

In der Nichtgebrauchsposition des hinteren Ladebodenabschnitts ist somit zum einen ein vorderer Laderaumbereich, der nach unten durch den vorderen Ladebodenabschnitt begrenzt ist und somit eine geringe Höhe aufweist, und andererseits ein hinterer Laderaumbereich geschaffen, der aufgrund des in die Nichtgebrauchsposition verschwenkten hinteren Ladebodenabschnitts eine größere Höhe aufweist als der vordere Laderaumbereich und je nach Verschwenkungsgrad des hinteren Ladebodenabschnitts nach unten vollständig oder teilweise durch den feststehenden Laderaumboden begrenzt ist. Darüber hinaus dient der in die Nichtgebrauchsposition verschwenkte hintere Ladebodenabschnitt als Laderaumunterteilung in Fahrzeugrichtung, so dass Ladegut in dem hinteren Laderaumbereich nicht nach vorne unter den vorderen Ladebodenabschnitt gelangen kann. Die fahrzeugseitigen Arretierungsmittel geben dem hinteren Ladebodenabschnitt in der Nichtgebrauchsposition dabei den notwendigen Halt. Darüber hinaus können in dem feststehenden Laderaumboden eingelassene Fächer für Werkzeug oder ähnliches vorgesehen sein, die durch Verschwenken des hinteren Ladebodenabschnitts in die Nichtgebrauchsposition besonders einfach zugänglich sind, ohne dass der gesamte Ladeboden in eine Nichtgebrauchsposition verschwenkt werden müsste.

In einer bevorzugten Ausführungsform der erfindungsgemäßen Kraftfahrzeuginneneinrichtung kann der hintere Ladebodenabschnitt durch Anheben des Ladebodens im Bereich der zweiten Schwenkachse in die Nichtgebrauchsposition verschwenkt werden. So kann die Bedienungsperson den Ladeboden zunächst kurz anheben, damit der hintere Ladebodenabschnitt allein aufgrund seines Eigengewichts um die zweite Schwenkachse verschwenkt und gegebenenfalls auch von fahrzeugseitigen Stützelementen gelöst wird. Gegebenenfalls kann der Ladeboden anschließend wieder abgesenkt werden, um den hinteren Ladebodenabschnitt in dessen Nichtgebrauchsposition zu bringen und dort zu arretieren. Die Handhabung des Ladebodens ist dadurch vereinfacht.

In einer vorteilhaften Ausführungsform der erfindungsgemäßen Kraftfahrzeuginneneinrichtung ist die dem vorderen Ladebodenabschnitt abgewandte Hinterkante des hinteren Ladebodenabschnitts in der Nichtgebrauchsposition dem Laderaumboden zugewandt.

Um dem Ladeboden die notwendige Stabilität zu verleihen, ist die Hinterkante des hinteren Ladebodenabschnitts in einer besonders bevorzugten Ausführungsform der erfindungsgemäßen Kraftfahrzeuginneneinrichtung in der Nichtgebrauchsposition an dem Laderaumboden und/oder einem Seitenverkleidungsteil abgestützt.

In einer weiteren vorteilhaften Ausführungsform der erfindungsgemäßen Kraftfahrzeuginneneinrichtung sind die Arretierungsmittel an dem Laderaumboden vorgesehen.

In einer besonders vorteilhaften Ausführungsform der erfindungsgemäßen Kraftfahrzeuginneneinrichtung sind die Arretierungsmittel an einem Seitenverkleidungsteil vorgesehen. Bei einem Seitenverkleidungsteil kann es sich beispielsweise um ein Innenverkleidungsteil aus Kunststoff handeln, das den Laderaum seitlich begrenzt. Dabei können die Arretierungsmittel beispielsweise an dem Seitenverkleidungsteil festgeschraubt sein.

Um jedoch die Herstellung der Kraftfahrzeuginneneinrichtung zu vereinfachen, sind die Arretierungsmittel in einer weiteren bevorzugten Ausführungsform der erfindungsgemäßen Kraftfahrzeuginneneinrichtung einstückig mit dem Seitenverkleidungsteil ausgebildet.

In einer weiteren besonders bevorzugten Ausführungsform der erfindungsgemäßen Kraftfahrzeuginneneinrichtung sind die Arretierungsmittel an das Seitenverkleidungsteil angespritzt. So kann das Seitenverkleidungsteil beispielsweise zusammen mit den Arretierungsmitteln im Rahmen desselben Spritzgießverfahrens erzeugt worden sein.

Um den hinteren Ladebodenabschnitt besonders einfach arretieren zu können, weisen die Arretierungsmittel in einer weiteren besonders bevorzugten Ausführungsform der erfindungsgemäßen Kraftfahrzeuginneneinrichtung mindestens eine nach oben geöffnete Aufnahme auf, in die die Hinterkante des hinteren Ladebodenabschnitts einbringbar ist.

Gemäß einer weiteren bevorzugten Ausführungsform der erfindungsgemäßen Kraftfahrzeuginneneinrichtung weisen die Arretierungsmittel zwei nach oben geöffnete Aufnahmen auf, die in Fahrzeugrichtung hintereinander angeordnet sind. Auf diese Weise hat die Bedienungsperson die Möglichkeit, den hinteren Ladebodenabschnitt mit unterschiedlichen Neigungen in der Nichtgebrauchsposition zu arretieren.

Gemäß einer besonders vorteilhaften Ausführungsform der erfindungsgemäßen Kraftfahrzeuginneneinrichtung kann der hintere Ladebodenabschnitt unter Schrägstellung des vorderen Ladebodenabschnitts in der Nichtgebrauchsposition arretiert werden. Der somit schräg gestellte vordere Ladebodenabschnitt hat den Vorteil, dass das darauf abgelegte Ladegut stets in eine sichere und gleich bleibende Position rutscht.

Um sicher zu stellen, dass das auf den vorderen Ladebodenabschnitt abgelegte Ladegut nicht nach hinten in den vergrößerten hinteren Laderaumbereich rutscht, ist der vordere Ladebodenabschnitt in einer weiteren besonders bevorzugten Ausführungsform der erfindungsgemäßen Kraftfahrzeuginneneinrichtung derart schräg gestellt, dass der vordere Ladebodenabschnitt in Fahrzeugrichtung nach unten geneigt ist.

In einer weiteren besonders vorteilhaften Ausführungsform der erfindungsgemäßen Kraftfahrzeuginneneinrichtung weist der Laderaumboden einen hinteren Laderaumbodenabschnitt auf, der in der Gebrauchsposition des hinteren Ladebodenabschnitts von dem hinteren Ladebodenabschnitt verdeckt und in der Nichtgebrauchsposition des hinteren Ladebodenabschnitts zugänglich ist. Auf diese Weise bildet nur noch der feststehende Laderaumboden bzw. dessen hinterer Laderaumbodenabschnitt die untere Begrenzung des hinteren Laderaumbereichs, der somit eine maximale Höhe hat.

In einer weiteren bevorzugten Ausführungsform der erfindungsgemäßen Kraftfahrzeuginneneinrichtung ist ein Aufnahmefach, vorzugsweise ein Reserveradfach, in den hinteren Laderaumbodenabschnitt eingelassen. Wie bereits zuvor erläutert, ist das Aufnahmefach bzw. das Reserveradfach bei dieser Ausführungsform besonders schnell und einfach zugänglich, ohne dass der gesamte Ladeboden in eine Nichtgebrauchsposition verschwenkt werden müsste.

In einer weiteren vorteilhaften Ausführungsform der erfindungsgemäßen Kraftfahrzeuginneneinrichtung ist der vordere Ladebodenabschnitt an seinem dem hinteren Ladebodenabschnitt abgewandten Abschnitt um die erste Schwenkachse verschwenkbar an dem Kraftfahrzeug angeordnet.

Gemäß einer weiteren vorteilhaften Ausführungsform der erfindungsgemäßen Kraftfahrzeuginneneinrichtung ist mindestens ein Vorsprung zum Abstützen des hinteren Ladebodenabschnitts in der Gebrauchsposition an dem Kraftfahrzeug vorgesehen.

Um den hinteren Ladebodenabschnitt besonders einfach aus der Gebrauchsposition zu lösen, in der der hintere Ladebodenabschnitt auf dem Vorsprung abgestützt ist, ist der Vorsprung in einer weiteren besonders bevorzugten Ausführungsform der erfindungsgemäßen Kraftfahrzeuginneneinrichtung an der Ladekante einer Laderaumöffnung angeordnet. So muss der Ladeboden lediglich im Bereich der zweiten Schwenkachse angehoben werden, um ein Verschwenken des hinteren Ladebodenabschnitts um die zweite Schwenkachse und somit ein Lösen aus der Stützposition auf dem Vorsprung zu bewirken.

Um das Anheben des Laderaumbodens im Bereich der zweiten Schwenkachse besonders einfach zu gestalten, ist in einer weiteren besonders vorteilhaften Ausführungsform der erfindungsgemäßen Kraftfahrzeuginneneinrichtung an dem der zweiten Schwenkachse zugewandten Abschnitt des vorderen Ladebodenabschnitts ein Griff, vorzugsweise ein Eingriff oder Durchgriff, zum Anheben des Ladebodens vorgesehen.

Um ein einfaches Verstauen des Ladebodens zu ermöglichen, wenn dieser in Gänze nicht benötigt wird, kann der vordere Ladebodenabschnitt in einer weiteren besonders vorteilhaften Ausführungsform der erfindungsgemäßen Kraftfahrzeuginneneinrichtung um die erste Schwenkachse in eine im Wesentlichen aufrechte Stauposition verschwenkt werden.

Nachdem der vordere Ladebodenabschnitt in dessen Platz sparende Stauposition verschwenkt wurde, kann auch der hintere Ladebodenabschnitt in einer weiteren vorteilhaften Ausführungsform der erfindungsgemäßen Kraftfahrzeuginneneinrichtung um die zweite Schwenkachse in eine Stauposition verschwenkt werden, in der der hintere Ladebodenabschnitt parallel zu dem vorderen Ladebodenabschnitt angeordnet ist. So können beispielsweise die Rückseiten des vorderen Ladebodenabschnitts und des hinteren Ladebodenabschnitts aufeinander geklappt werden.

In einer weiteren vorteilhaften Ausführungsform der erfindungsgemäßen Kraftfahrzeuginneneinrichtung ist der vordere Ladebodenabschnitt derart dimensioniert, dass sich der vordere Ladebodenabschnitt in der Stauposition in eine geringere Höhe als die Rückenlehne eines vor dem Ladeboden angeordneten Fahrzeugsitzes erstreckt. So kann der vordere Ladebodenabschnitt um die erste Schwenkachse in seine Stauposition verschwenkt werden, ohne über die obere Kante der Rückenlehne hervorzustehen. Hierdurch wird die Sicht der Fahrzeuginsassen nach hinten nicht eingeschränkt. Um letzteres zu erreichen, muss lediglich noch der hintere Ladebodenabschnitt um die zweite Schwenkachse in seine Stauposition parallel zu dem vorderen Ladebodenabschnitt verschwenkt werden.

Die Erfindung wird im Folgenden anhand einer beispielhaften Ausführungsform unter Bezugnahme auf die beigefügten Zeichnungen näher erläutert. Es zeigen:
- Fig. 1: eine teilweise, schematische Seitenansicht eines Kraftfahrzeugs mit einer Ausführungsform der erfindungsgemäßen Kraftfahrzeuginneneinrichtung mit dem hinteren Ladebodenabschnitt in der Gebrauchsposition,
- Fig. 2: das Kraftfahrzeug von Fig. 1 mit dem Ladeboden in einer Zwischenposition,
- Fig. 3: das Kraftfahrzeug von Fig. 2 mit dem hinteren Ladebodenabschnitt in der Nichtgebrauchsposition und
- Fig. 4: das Kraftfahrzeug von Fig. 1 mit dem vorderen Ladebodenabschnitt und dem hinteren Ladebodenabschnitt in der jeweiligen Stauposition.

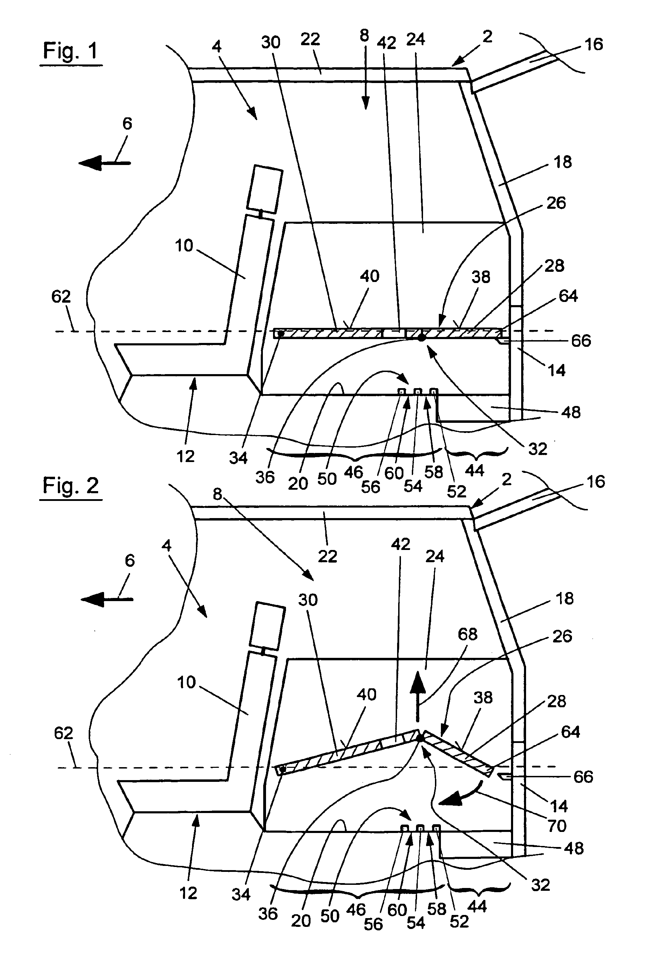

Fig. 1 zeigt eine Seitenansicht des hinteren Teils eines Kraftfahrzeugs 2 mit einer Ausführungsform der erfindungsgemäßen Kraftfahrzeuginneneinrichtung 4, wobei die Fahrzeugrichtung anhand des Pfeils 6 angedeutet ist. Das Kraftfahrzeug 2 weist einen Laderaum 8 auf, der nach vorne durch die Rückenlehne 10 eines Fahrzeugsitzes 12 in der hinteren Sitzreihe, nach hinten durch eine Ladekante 14 und eine Laderaumklappe 16, die hier geöffnet ist und eine Laderaumöffnung 18 freigibt, nach unten durch den Laderaumboden 20, nach oben durch das Fahrzeugdach 22 und zu den Seiten durch die Karosserie des Kraftfahrzeugs 2 begrenzt ist, wobei an den Seiten dem Laderaum 8 zugewandte Seitenverkleidungsteile 24 angeordnet sind, von denen in Fig. 1 lediglich eines zu sehen ist.

Innerhalb des Laderaums 8 ist ein Ladeboden 26 oberhalb des Laderaumbodens 20 angeordnet. Der Ladeboden 26 weist einen hinteren Ladebodenabschnitt 28 und einen vorderen Ladebodenabschnitt 30 auf, die an ihren einander zugewandten Kanten über ein Scharnier 32 verbunden sind. Die beiden Ladebodenabschnitte 38, 40 sind jeweils plattenförmig und formstabil ausgebildet. Der vordere Ladebodenabschnitt 30 ist in einem Abschnitt, der dem hinteren Ladebodenabschnitt 28 abgewandt ist, um eine erste Schwenkachse verschwenkbar an dem Kraftfahrzeug 2 bzw. an den Seitenverkleidungsteilen 24 angeordnet. Zu diesem Zweck könnte der vordere Ladebodenabschnitt 30 beispielsweise seitlich hervorstehende Bolzen aufweisen, die in entsprechende Vertiefungen in den Seitenverkleidungsteilen 24 ragen. Die erste Schwenkachse 34 erstreckt sich quer zur Fahrzeugrichtung 6 und ermöglicht ein Verschwenken des gesamten Ladebodens 26 um die Schwenkachse 34.

Das Scharnier 32 bildet eine zweite Schwenkachse 36 aus, um welche der hintere und der vordere Ladebodenabschnitt 28, 30 zueinander verschwenkt werden können. Die zweite Schwenkachse 36 erstreckt sich dabei ebenfalls quer zur Fahrzeugrichtung 6 und parallel zu der ersten Schwenkachse 34. Das Scharnier 32 ist in dieser Ausführungsform derart ausgebildet, dass die Oberseiten 38, 40 des hinteren bzw. vorderen Ladebodenabschnitts 28, 30 unabhängig von der Position des Ladebodens 26 stets einen Winkel von mindestens 180° einschließen. Auf diese Weise ist gewährleistet, dass die Oberseite 38, 40 der Ladebodenabschnitte 28, 30 in der Normalposition bzw. Gebrauchsposition eine zusammenhängende, ebene Fläche ausbilden, die einfach beladen werden kann.

An dem der zweiten Schwenkachse 36 zugewandten Abschnitt des vorderen Ladebodenabschnitts 30 ist ferner ein als Durchgriff 42 ausgebildeter Griff zum manuellen Betätigen des Ladebodens 26 vorgesehen. Ferner ist der hintere Ladebodenabschnitt 28 bezogen auf die Fahrzeugrichtung 6 kürzer als der vordere Ladebodenabschnitt 30 ausgebildet, wodurch die Handhabung des Ladebodens 26 vereinfacht ist, zumal sich die Bedienperson nicht so weit durch die Laderaumöffnung 18 in den Laderaum 8 beugen muss, um zu dem Durchgriff 42 zu gelangen.

Der unterhalb des Ladebodens 26 angeordnete feststehende Laderaumboden 20 kann in einen hinteren Laderaumbodenabschnitt 44 und einen vorderen Laderaumbodenabschnitt 46 unterteilt werden, wobei der hintere Laderaumbodenabschnitt 44 unterhalb des hinteren Ladebodenabschnitts 28 und der vordere Laderaumbodenabschnitt 46 unterhalb des vorderen Ladebodenabschnitts 30 angeordnet ist, wenn sich der Ladeboden 26 in der in Fig. 1 gezeigten Position befindet. In den hinteren Laderaumbodenabschnitt 44 ist ein Aufnahmefach 48 eingelassen, das beispielsweise der Aufnahme eines Reserverades (nicht dargestellt) dienen kann.

Die Kraftfahrzeuginneneinrichtung 4 weist ferner fahrzeugseitige Arretierungsmittel 50 auf, die der Arretierung des hinteren Ladebodenabschnitts 28 in einer Nichtgebrauchsposition dienen, wie dies später ausführlicher erläutert wird. Die Arretierungsmittel 50 können an dem Laderaumboden 20 vorgesehen sein, sind in der vorliegenden Ausführungsform jedoch an jeweils beiden Seitenverkleidungsteilen 24 angeordnet. Dabei sind die Arretierungsmittel 50 einstückig mit den Seitenverkleidungsteilen 24 ausgebildet, indem die Arretierungsmittel 50 zusammen mit den Seitenverkleidungsteilen 24 in einem Spritzgießverfahren erzeugt wurden.

In der dargestellten Ausführungsform umfassen die Arretierungsmittel 50 drei vorstehende Ansätze 52, 54, 56, die von den Seitenverkleidungsteilen 24 nach innen hervorstehen und gegenüber dem Laderaumboden 20 erhaben ausgebildet sind. Die vorstehenden Ansätze 52, 54, 56 sind in Fahrzeugrichtung 6 derart hintereinander angeordnet, dass zwischen den vorstehenden Ansätzen 52 und 54 eine erste nach oben geöffnete Aufnahme 58 und zwischen den vorstehenden Ansätzen 54 und 56 eine zweite nach oben geöffnete Aufnahme 60 ausgebildet ist. Die erste und zweite Aufnahme 58, 60 sind somit in Fahrzeugrichtung 6 hintereinander angeordnet.

Nachfolgend werden weitere Merkmale der Kraftfahrzeuginneneinrichtung 4 sowie die Funktionsweise derselben unter Bezugnahme auf die Fig. 1 bis 3 beschrieben. In Fig. 1 befindet sich der Ladeboden 26 in einer Normalposition. Sowohl der vordere Ladebodenabschnitt 30 als auch der hintere Ladebodenabschnitt 28 erstrecken sich in einer horizontalen Ebene 62, so dass ein einfaches Be-und Entladen des Ladebodens 26 möglich ist. In dieser Normalposition des Ladebodens 26 ist die dem vorderen Ladebodenabschnitt 30 abgewandte Hinterkante 64 des hinteren Ladebodenabschnitts 28 auf einem Vorsprung 66 abgestützt, der an dem Kraftfahrzeug 2, in diesem Fall an der Ladekante 14 der Laderaumöffnung 18, angeordnet ist. In der dargestellten Normalposition des Ladebodens 26 befindet sich der hintere Ladebodenabschnitt 28 in einer Gebrauchsposition, in der ein Beladen der Oberseite 40 des hinteren Ladebodenabschnitts 28 möglich ist.

Möchte nun die Bedienungsperson an das Reserverad (nicht dargestellt) innerhalb des Aufnahmefachs 48 gelangen oder eine andere Aufteilung des Laderaums 8 erreichen, so muss wie folgt vorgegangen werden. Zunächst wird der Ladeboden 26 mithilfe des Durchgriffs 42 im Bereich der zweiten Schwenkachse 36 angehoben, wie dies in Fig. 2 anhand des Pfeils 68 angedeutet ist. Dadurch verschwenkt der hintere Ladebodenabschnitt 28 um die zweite Schwenkachse 36 aufgrund seines Eigengewichts nach unten, so dass sich die Gesamtlänge des Ladebodens 26 in Fahrzeugrichtung 6 verkürzt. Dies hat zur Folge, dass sich die Hinterkante 64 des hinteren Ladebodenabschnitts 28 von dem Vorsprung 66 löst und der hintere Ladebodenabschnitt 28 somit weiter um die zweite Schwenkachse 36 nach unten verschwenkt werden kann, wie dies anhand des Pfeils 70 in Fig. 2 angedeutet ist.

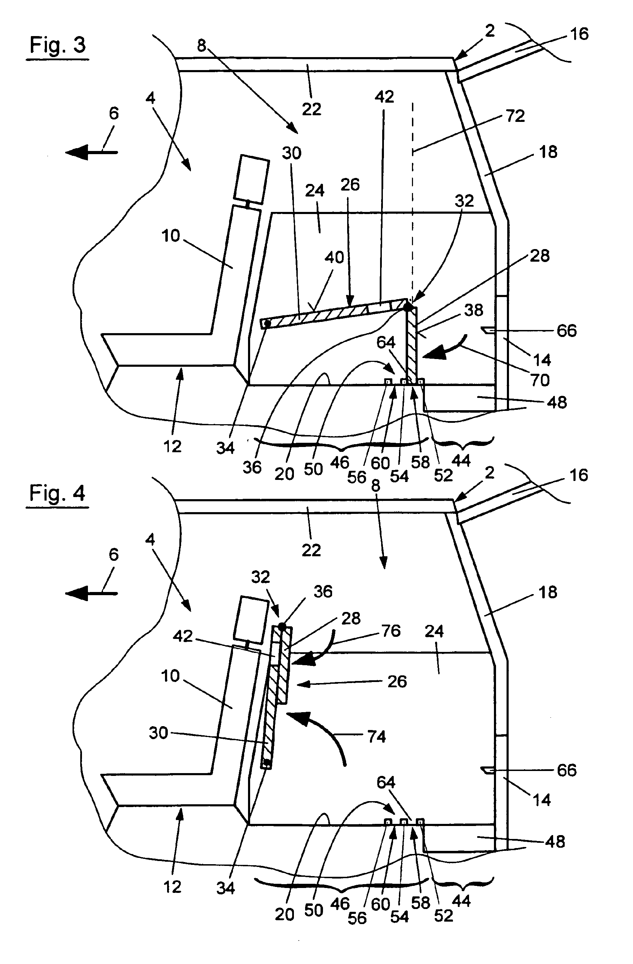

Durch das Verschwenken um die zweite Schwenkachse 36 gelangt der hintere Ladebodenabschnitt 28 in eine Nichtgebrauchsposition, die in Fig. 3 gezeigt ist. In der Nichtgebrauchsposition erstreckt sich der hintere Ladebodenabschnitt 28 in einer vertikalen oder zumindest schräg gestellten Ebene 72. Nunmehr kann die Bedienungsperson den Ladeboden 26 wieder absenken, so dass die Hinterkante 64, die nunmehr dem Laderaumboden 20 zugewandt ist, in die erste Aufnahme 58 oder die zweite Aufnahme 60 eingebracht werden, wie dies in Fig. 3 gezeigt ist. Die vorstehenden Ansätze 52 und 54 - gegebenenfalls 54 und 56 - verhindern ein weiteres Verschwenken des hinteren Ladebodenabschnitts 28 um die zweite Schwenkachse 36 und bewirken eine sichere Arretierung des hinteren Ladebodenabschnitts 28 in der Nichtgebrauchsposition. In dieser Nichtgebrauchsposition ist die Hinterkante 64 des hinteren Ladebodenabschnitts 28 sowohl an dem Laderaumboden 20 als auch an den Arretierungsmitteln 50 abgestützt.

Wie aus Fig. 3 hervorgeht, ist der vordere Ladebodenabschnitt 30 um die erste Schwenkachse 34 verschwenkt und somit schräg gestellt, wenn der hintere Ladebodenabschnitt 28 in der Nichtgebrauchsposition arretiert ist. Dabei ist der vordere Ladebodenabschnitt 30 derart schräg gestellt, dass dieser in Fahrzeugrichtung 6 nach unten geneigt ist. Dies bewirkt eine besonders sichere Lagerung des Ladeguts (nicht dargestellt) auf der Oberseite 40 des vorderen Ladebodenabschnitts 30, wenn sich der hintere Ladebodenabschnitt 28 in der Nichtgebrauchsposition befindet.

Ferner ist aus Fig. 3 ersichtlich, dass der hintere Laderaumbodenabschnitt 44, der in der Gebrauchsposition des hinteren Ladebodenabschnitts 28 noch von dem hinteren Ladebodenabschnitt 28 verdeckt war (Fig. 1), in der Nichtgebrauchsposition des hinteren Ladebodenabschnitts 28 nunmehr zugänglich ist, so dass die Bedienungsperson leicht an das Reserverad oder ähnliches innerhalb des Aufnahmefachs 48 gelangen kann. Darüber hinaus ist ein besonders hoher hinterer Bereich des Laderaums 8 geschaffen worden, der nach unten nur noch durch den hinteren Laderaumbodenabschnitt 44 begrenzt ist, wohingegen ein vorderer Bereich des Laderaums 8 weiterhin durch den vorderen Ladebodenabschnitt 30 des Ladebodens 26 nach unten begrenzt ist. Der hintere Ladebodenabschnitt 28 in der Nichtgebrauchsposition bewirkt somit eine Laderaumteilung, bei der verhindert ist, dass Ladegut von hinten zwischen den vorderen Laderaumbodenabschnitt 46 und den vorderen Ladebodenabschnitt 30 gelangen kann.

Fig. 4 zeigt eine weitere Funktion der Kraftfahrzeuginneneinrichtung 4. So kann der vordere Ladebodenabschnitt 30 mitsamt dem hinteren Ladebodenabschnitt 28 von der in Fig. 1 gezeigten Normalposition um die erste Schwenkachse 34 in eine im Wesentlichen aufrechte Stauposition verschwenkt werden, wie dies anhand des Pfeils 74 angedeutet ist. Ferner kann der hintere Ladebodenabschnitt 28 relativ zu dem vorderen Ladebodenabschnitt 30 um die zweite Schwenkachse 36 in eine Stauposition verschwenkt werden, wie dies anhand des Pfeils 76 angedeutet ist, in der der hintere Ladebodenabschnitt 28 parallel zu dem vorderen Ladebodenabschnitt 30 angeordnet ist. In dieser Position liegen die Unterseiten (kein Bezugszeichen) des hinteren und vorderen Ladebodenabschnitts 28, 30 aneinander an. Der vordere Ladebodenabschnitt 30 ist dabei derart dimensioniert, dass sich der vordere Ladebodenabschnitt 30 in der Stauposition in eine geringere Höhe als die Rückenlehne 10 des vor dem Ladeboden 26 angeordneten Fahrzeugsitzes 12 erstreckt. Auf diese Weise kann der Ladeboden 26 einerseits Platz sparend verstaut werden und gewährleistet andererseits eine ungehinderte Sicht nach hinten.

### Bezugszeichenliste

- 2: Kraftfahrzeug
- 4: Kraftfahrzeuginneneinrichtung
- 6: Fahrzeugrichtung
- 8: Laderaum
- 10: Rückenlehne
- 12: Fahrzeugsitz
- 14: Ladekante
- 16: Laderaumklappe
- 18: Laderaumöffnung
- 20: Laderaumboden
- 22: Fahrzeugdach
- 24: Seitenverkleidungsteile
- 26: Ladeboden
- 28: hinterer Ladebodenabschnitt
- 30: vorderer Ladebodenabschnitt
- 32: Scharnier
- 34: erste Schwenkachse
- 36: zweite Schwenkachse
- 38: Oberseite
- 40: Oberseite
- 42: Durchgriff
- 44: hinterer Laderaumbodenabschnitt
- 46: vorderer Laderaumbodenabschnitt
- 48: Aufnahmefach
- 50: Arretierungsmittel
- 52: vorstehender Ansatz
- 54: vorstehender Ansatz
- 56: vorstehender Ansatz
- 58: erste Aufnahme
- 60: zweite Aufnahme
- 62: horizontale Ebene
- 64: Hinterkante
- 66: Vorsprung
- 68: Pfeil
- 70: Pfeil
- 72: vertikale Ebene
- 74: Pfeil
- 76: Pfeil

## Patentansprüche

1. Kraftfahrzeuginneneinrichtung (4) mit einem über einem Laderaumboden (20) angeordneten Ladeboden (26), der um eine erste Schwenkachse (34) verschwenkbar an dem Kraftfahrzeug (2) angeordnet ist und einen hinteren Ladebodenabschnitt (28) und einen vorderen Ladebodenabschnitt (30) aufweist, die um eine zweite Schwenkachse (36) verschwenkbar miteinander verbunden sind, wobei der hintere Ladebodenabschnitt (28) von einer Gebrauchsposition, in der der hintere Ladebodenabschnitt (28) in einer horizontalen Ebene (62) angeordnet ist, um die zweite Schwenkachse (36) in eine Nichtgebrauchsposition verschwenkbar ist, in der der hintere Ladebodenabschnitt (28) in einer schräg gestellten oder vertikalen Ebene (72) angeordnet ist, wobei ferner fahrzeugseitige Arretierungsmittel (50) zum Arretieren des hinteren Ladebodenabschnitts (28) in der Nichtgebrauchsposition vorgesehen sind, **dadurch gekennzeichnet, dass** der hintere Ladebodenabschnitt (28) nach unten unter die horizontale Ebene (62) in die Nichtgebrauchsposition verschwenkbar ist.

2. Kraftfahrzeuginneneinrichtung (4) nach Anspruch 1,
**dadurch gekennzeichnet, dass** der hintere Ladebodenabschnitt (28) durch Anheben des Ladebodens (26) im Bereich der zweiten Schwenkachse (36) in die Nichtgebrauchsposition verschwenkbar ist.

3. Kraftfahrzeuginneneinrichtung (4) nach einem der vorangehenden Ansprüche, **dadurch gekennzeichnet, dass** die dem vorderen Ladebodenabschnitt (30) abgewandte Hinterkante (64) des hinteren Ladebodenabschnitts (28) in der Nichtgebrauchsposition dem Laderaumboden (20) zugewandt ist, wobei die Hinterkante (64) des hinteren Ladebodenabschnitts (28) in der Nichtgebrauchsposition vorzugsweise an dem Laderaumboden (20) und/oder einem Seitenverkleidungsteil (24) abgestützt ist.

4. Kraftfahrzeuginneneinrichtung (4) nach einem der vorangehenden Ansprüche, **dadurch gekennzeichnet, dass** die Arretierungsmittel (50) an dem Laderaumboden (20) vorgesehen sind.

5. Kraftfahrzeuginneneinrichtung (4) nach einem der vorangehenden Ansprüche, **dadurch gekennzeichnet, dass** die Arretierungsmittel (50) an einem Seitenverkleidungsteil (24) vorgesehen sind, wobei die Arretierungsmittel (50) vorzugsweise einstückig mit dem Seitenverkleidungsteil (24) ausgebildet, besonders bevorzugt an das Seitenverkleidungsteil (24) angespritzt sind.

6. Kraftfahrzeuginneneinrichtung (4) nach einem der vorangehenden Ansprüche, **dadurch gekennzeichnet, dass** die Arretierungsmittel (50) mindestens eine nach oben geöffnete Aufnahme (58, 60) aufweisen, in die die Hinterkante (64) des hinteren Ladebodenabschnitts (28) einbringbar ist.

7. Kraftfahrzeuginneneinrichtung (4) nach einem der vorangehenden Ansprüche, **dadurch gekennzeichnet, dass** die Arretierungsmittel (50) zwei nach oben geöffnete Aufnahmen (58, 60) aufweisen, die in Fahrzeugrichtung (6) hintereinander angeordnet sind.

8. Kraftfahrzeuginneneinrichtung (4) nach einem der vorangehenden Ansprüche, **dadurch gekennzeichnet, dass** der hintere Ladebodenabschnitt (28) unter Schrägstellung des vorderen Ladebodenabschnitts (30) in der Nichtgebrauchsposition arretierbar ist, wobei der vordere Ladebodenabschnitt (30) vorzugsweise derart schräg gestellt ist, dass der vordere Ladebodenabschnitt (30) in Fahrzeugrichtung (6) nach unten geneigt ist.

9. Kraftfahrzeuginneneinrichtung (4) nach einem der vorangehenden Ansprüche, **dadurch gekennzeichnet, dass** der Laderaumboden (20) einen hinteren Laderaumbodenabschnitt (44) aufweist, der in der Gebrauchsposition des hinteren Ladebodenabschnitts (28) von dem hinteren Ladebodenabschnitt (28) verdeckt und in der Nichtgebrauchsposition des hinteren Ladebodenabschnitts (28) zugänglich ist, wobei vorzugsweise ein Aufnahmefach (48), besonders bevorzugt eine Reserveradfach, in den hinteren Laderaumbodenabschnitt (44) eingelassen ist.

10. Kraftfahrzeuginneneinrichtung (4) nach einem der vorangehenden Ansprüche, **dadurch gekennzeichnet, dass** der vordere Ladebodenabschnitt (30) an seinem dem hinteren Ladebodenabschnitt (28) abgewandten Abschnitt um die erste Schwenkachse (34) verschwenkbar an dem Kraftfahrzeug (2) angeordnet ist.

11. Kraftfahrzeuginneneinrichtung (4) nach einem der vorangehenden Ansprüche, **dadurch gekennzeichnet, dass** mindestens ein Vorsprung (66) zum Abstützen des hinteren Ladebodenabschnitts (28) in der Gebrauchsposition an dem Kraftfahrzeug (2) vorgesehen ist, wobei der Vorsprung (66) vorzugsweise an der Ladekante (14) einer Laderaumöffnung (18) angeordnet ist.

12. Kraftfahrzeuginneneinrichtung (4) nach einem der vorangehenden Ansprüche, **dadurch gekennzeichnet, dass** an dem der zweiten Schwenkachse (36) zugewandten Abschnitt des vorderen Ladebodenabschnitts (30) ein Griff, vorzugsweise ein Eingriff oder Durchgriff (42), zum Anheben des Ladebodens (26) vorgesehen ist.

13. Kraftfahrzeuginneneinrichtung (4) nach einem der vorangehenden Ansprüche, **dadurch gekennzeichnet, dass** der vordere Ladebodenabschnitt (30) um die erste Schwenkachse (34) in eine im Wesentlichen aufrechte Stauposition verschwenkbar ist, wobei der hintere Ladebodenabschnitt (28) vorzugsweise um die zweite Schwenkachse (36) in eine Stauposition verschwenkbar ist, in der der hintere Ladebodenabschnitt (28) parallel zu dem vorderen Ladebodenabschnitt (30) angeordnet ist.

14. Kraftfahrzeuginneneinrichtung (4) nach Anspruch 13, **dadurch gekennzeichnet, dass** der vordere Ladebodenabschnitt (30) derart dimensioniert ist, dass sich der vordere Ladebodenabschnitt (30) in der Stauposition in eine geringere Höhe als die Rückenlehne (10) eines vor dem Ladeboden (26) angeordneten Fahrzeugsitzes (12) erstreckt.

## Claims

1. An interior fitting (4) of a motor vehicle, comprising a loading base (26) arranged above a loading compartment base (20), said loading base (26) being pivotably arranged about a first pivoting axis (34) on the motor vehicle (2) and comprising a rear loading base section (28) and a front loading base section (30), which are pivotably connected with each other about a second pivoting axis (36), with the rear loading base section (28) being pivotable from an in-use position in which the rear loading base section (28) is arranged in a horizontal plane (62) about the second pivoting axis (36) to a non-use position in which the rear loading base section (28) is arranged in a obliquely positioned or vertical plane (72), with further locking means (50) on the vehicle side being provided for locking the rear loading base section (28) in the non-use position, **characterized in that** the rear loading base section (28) can be pivoted downwardly beneath the horizontal plane (62) to the non-use position.

2. An interior fitting (4) of the motor vehicle according to claim 1, **characterized in that** the rear loading base section (28) can be pivoted to the non-use position by lifting the loading base (26) in the region of the second pivoting axis (36).

3. An interior fitting (4) of the motor vehicle according to one of the preceding claims, **characterized in that** the rear edge (64) of the rear loading base section (28) facing away from the front loading base section (30) faces the loading compartment base (20) in the non-use position, with the rear edge (64) of the rear loading base section (28) being preferably supported in the non-use position on the loading compartment base (20) and/or a side panelling part (24).

4. An interior fitting (4) of the motor vehicle according to one of the preceding claims, **characterized in that** the locking means (50) are provided on the loading compartment base (20).

5. An interior fitting (4) of the motor vehicle according to one of the preceding claims, **characterized in that** the locking means (50) are provided on a side panelling part (24), with the locking means (50) preferably being arranged in an integral manner with the side panelling part (24), especially preferably injection-moulded onto the side panelling part (24).

6. An interior fitting (4) of the motor vehicle according to one of the preceding claims, **characterized in that** the locking means (50) comprise at least one upwardly open receiver (58, 60), into which the rear edge (64) of the rear loading compartment section (28) can be introduced.

7. An interior fitting (4) of the motor vehicle according to one of the preceding claims, **characterized in that** the locking means (50) comprise two upwardly open receivers (58, 60) which are arranged behind one another in the direction of the vehicle (6).

8. An interior fitting (4) of the motor vehicle according to one of the preceding claims, **characterized in that** the rear loading base section (28) can be locked in the non-use position by oblique positioning of the front loading base section (30), with the front loading base section (30) preferably being inclined in such a way that the front loading base section (30) is downwardly inclined in the direction of the vehicle (6).

9. An interior fitting (4) of the motor vehicle according to one of the preceding claims, **characterized in that** the loading compartment base (20) comprises a rear loading compartment base section (44) which in the in-use position of the rear loading base section (28) is covered by the rear loading base section (28) and is accessible in the non-use position of the rear loading base section (28), with preferably a receiving compartment (48), especially preferably a spare wheel compartment, being incorporated in the rear loading compartment base section (44).

10. An interior fitting (4) of the motor vehicle according to one of the preceding claims, **characterized in that** the front loading base section (30) is pivotably arranged about the first pivoting axis (34) on the motor vehicle (2) in its section facing away from the rear loading base section (28).

11. An interior fitting (4) of the motor vehicle according to one of the preceding claims, **characterized in that** at least one projection (66) is provided on the motor vehicle (2) for supporting the rear loading base section (28) in the in-use position, with the projection (66) preferably being arranged on a trunk sill (14) of a loading compartment opening (18).

12. An interior fitting (4) of the motor vehicle according to one of the preceding claims, **characterized in that** a grip, preferably a stock or handle, is provided for lifting the loading base (26) on the section of the front loading base section (30) facing the second pivoting axis (36).

13. An interior fitting (4) of the motor vehicle according to one of the preceding claims, **characterized in that** the front loading base section (30) can be pivoted about the first pivoting axis (34) to a substantially upright stowage position, with the rear loading base section (28) being preferably pivotable about the second pivoting axis (36) to a stowage position in which the rear loading base section (28) is arranged parallel to the front loading base section (30).

14. An interior fitting (4) of the motor vehicle according to claim 13, **characterized in that** the front loading base section (30) is dimensioned in such a way that the front loading base section (30) extends in the stowage position at a lower height than the backrest (10) of a vehicle seat (12) arranged in front of the loading base (26).

## Revendications

1. Aménagement intérieur de véhicule à moteur (4) avec un plancher de chargement (26) disposé au-dessus d'un plancher d'espace de chargement (20), qui est disposé sur le véhicule à moteur (2) avec possibilité de pivotement autour d'un premier axe de pivotement (34) et présente une partie arrière de plancher de chargement (28) et une partie avant de plancher de chargement (30) reliées entre elles avec possibilité de pivotement autour d'un deuxième axe de pivotement (36), la partie arrière de plancher de chargement (28) pouvant pivoter autour du deuxième axe de pivotement (36) d'une position d'utilisation, dans laquelle la partie arrière de plancher de chargement (28) est disposée dans un plan horizontal (62), à une position de non-utilisation dans laquelle le partie arrière de plancher de chargement (28) est disposée dans un plan oblique ou vertical (72), des moyens de blocage (50) étant en outre prévus du côté du véhicule pour bloquer la partie arrière de plancher de chargement (28) dans la position de non-utilisation, **caractérisé en ce que** la partie arrière de plancher de chargement (28) peut basculer vers le bas sous le plan horizontal (62) dans la position de non-utilisation.

2. Aménagement intérieur de véhicule à moteur (4) selon la revendication 1, **caractérisé en ce que** la partie arrière de plancher de chargement (28) peut basculer dans la position de non-utilisation quand on soulève le plancher de chargement (26) au niveau du deuxième axe de pivotement (36).

3. Aménagement intérieur de véhicule à moteur (4) selon l'une des revendications précédentes, **caractérisé en ce que** le bord arrière (64) de la partie arrière de plancher de chargement (28) éloigné de la partie avant de plancher de chargement (30) est tourné, dans la position de non-utilisation, vers le plancher d'espace de chargement (20), le bord arrière (64) de la partie arrière de plancher de chargement (28) s'appuyant de préférence, dans la position de non-utilisation, sur le plancher d'espace de chargement (20) et/ou sur une partie d'habillage latéral (24).

4. Aménagement intérieur de véhicule à moteur (4) selon l'une des revendications précédentes, **caractérisé en ce que** les moyens de blocage (50) sont prévus sur le plancher d'espace de chargement (20).

5. Aménagement intérieur de véhicule à moteur (4) selon l'une des revendications précédentes, **caractérisé en ce que** les moyens de blocage (50) sont prévus sur une partie d'habillage latéral (24), les die moyens de blocage (50) étant de préférence conformés d'un seul tenant avec la partie d'habillage latéral (24), et en particulier moulés par injection sur la partie d'habillage latéral (24).

6. Aménagement intérieur de véhicule à moteur (4) selon l'une des revendications précédentes, **caractérisé en ce que** les moyens de blocage (50) présentent au moins un logement (58, 60) ouvert vers le haut, dans lequel le bord arrière (64) de la partie arrière de plancher de chargement (28) peut être introduite.

7. Aménagement intérieur de véhicule à moteur (4) selon l'une des revendications précédentes, **caractérisé en ce que** les moyens de blocage (50) présentent deux logements (58, 60) ouverts vers le haut, qui sont disposés l'un derrière l'autre dans le sens du véhicule (6).

8. Aménagement intérieur de véhicule à moteur (4) selon l'une des revendications précédentes, **caractérisé en ce que** la partie arrière de plancher de chargement (28) peut être bloquée en plaçant la partie avant de plancher de chargement (30) en oblique dans la position de non-utilisation, la partie avant de plancher de chargement (30) étant placée de préférence en oblique de telle manière que la partie avant de plancher de chargement (30) soit inclinée vers le bas dans le sens du véhicule (6).

9. Aménagement intérieur de véhicule à moteur (4) selon l'une des revendications précédentes, **caractérisé en ce que** le plancher d'espace de chargement (20) présente une partie arrière de plancher d'espace de chargement (44), qui est couverte par la partie arrière de plancher de chargement (28) dans la position d'utilisation de la partie arrière de plancher de chargement (28) et est accessible dans la position de non-utilisation de la partie arrière de plancher de chargement (28), un logement (48), de préférence un logement de roue de secours, étant de préférence ménagé dans la partie arrière de plancher d'espace de chargement (44).

10. Aménagement intérieur de véhicule à moteur (4) selon l'une des revendications précédentes, **caractérisé en ce que** la partie avant de plancher de chargement (30) est disposée dans sa partie éloignée de la partie arrière de plancher de chargement (28) sur le véhicule à moteur (2) de façon à pouvoir pivoter autour du premier axe de pivotement (34).

11. Aménagement intérieur de véhicule à moteur (4) selon l'une des revendications précédentes, **caractérisé en ce qu'**au moins une saillie (66) est prévue pour soutenir la partie arrière de plancher de chargement (28) sur le véhicule à moteur (2) dans la position d'utilisation, la saillie (66) étant de préférence disposée sur le bord de chargement (14) d'une ouverture d'espace de chargement (18).

12. Aménagement intérieur de véhicule à moteur (4) selon l'une des revendications précédentes, **caractérisé en ce qu'**une poignée est prévue dans la partie tournée vers le deuxième axe de pivotement (36) de la partie avant de plancher de chargement (30), de préférence une poignée en creux ou traversante (42), pour soulever le plancher de chargement (26).

13. Aménagement intérieur de véhicule à moteur (4) selon l'une des revendications précédentes, **caractérisé en ce que** la partie avant de plancher de chargement (30) peut pivoter autour du premier axe de pivotement (34) dans une position de rangement sensiblement redressée, la partie arrière de plancher de chargement (28) pouvant de préférence basculer autour du deuxième axe de pivotement (36) dans une position de rangement dans laquelle la partie arrière de plancher de chargement (28) est disposée parallèlement à la partie avant de plancher de chargement (30).

14. Aménagement intérieur de véhicule à moteur (4) selon la revendication 13, **caractérisé en ce que** la partie avant de plancher de chargement (30) est dimensionnée de telle manière que la partie avant de plancher de chargement (30) s'étende dans la position de rangement à une hauteur moins grande que le dossier (10) d'un siège de véhicule (12) disposé devant le plancher de chargement (26).
